(19) Europäisches Patentamt
European Patent Office
Office européen des brevets

(11) EP 0 672 466 B1

(12) **FASCICULE DE BREVET EUROPEEN**

(45) Date de publication et mention de la délivrance du brevet:
**20.01.1999 Bulletin 1999/03**

(51) Int. Cl.[6]: **B05D 1/00**, C23C 18/12

(21) Numéro de dépôt: **95400370.3**

(22) Date de dépôt: **22.02.1995**

(54) **Méthode de collage de particules minérales sur des supports**

Verfahren zum Anbringen Mineralteilchen auf einem Substrat

Method for adhering mineral particules on a substrate

(84) Etats contractants désignés:
**DE GB IT NL**

(30) Priorité: **17.03.1994 FR 9403249**

(43) Date de publication de la demande:
**20.09.1995 Bulletin 1995/38**

(73) Titulaire:
**INSTITUT FRANCAIS DU PETROLE**
**92502 Rueil-Malmaison (FR)**

(72) Inventeurs:
- **Rouaud, Thierry**
  **F-75013 Paris (FR)**
- **Robin, Michel**
  **F-78300 Poissy (FR)**

(56) Documents cités:
- **PATENT ABSTRACTS OF JAPAN vol. 16 no. 133 (C-0925) ,6 Avril 1992 & JP-A-03 295826 (SEIKO EPSON CORP.)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Xerox (UK) Business Services
2.16.7/3.6

## Description

L'invention concerne un procédé de collage de particules minérales sur des supports, en particulier des supports plans tels que des lames de verre ou de métal.

Les gisements d'hydrocarbures ont longtemps été considérés comme des milieux mouillables à l'eau mais, dans un passé récent, certaines études ont mis en évidence l'existence de zones hydrophobes ou de mouillabilité hétérogène. Il est important d'approfondir les connaissances dans le domaine de la mouillabilité des différents minéraux présents dans les gisements pétroliers, puisque ce paramètre influence au premier ordre la récupération.

L'angle $\theta$ résultant d'un équilibre thermodynamique entre trois tensions interfaciales $\gamma$ caractérise la mouillabilité d'un solide **S** vis à vis de deux fluides **L1** et **L2** en contact.

$$\gamma \cos \theta = \gamma_{SL2} - \gamma_{SL1}$$

où $\gamma$ est la tension interfaciale entre les deux fluides L1 et L2, $\gamma_{SL1}$ la tension interfaciale entre le solide S et le fluide L1 et $\gamma_{SL2}$ la tension interfaciale ente le solide S et le fluide L2.

Une des techniques utilisées pour la mesure de l'angle de contact est la méthode de Wilhelmy. Elle consiste à mesurer la force exercée par une interface fluide-fluide sur une surface solide lorsque cette dernière se déplace à travers l'interface. Si le solide est une lame plane rectangulaire, la force exercée est exprimée en Newton:

$$F = 2\,(L + E)\,\gamma \cos \theta + PA + PL$$

avec :

| | |
|---|---|
| 2 (L + E) | : périmètre de la lame, L étant sa largeur et E son épaisseur, en mètres |
| $\gamma$ | : Tension interfaciale des fluides (en général des liquides) L1 et L2, en Newton/mètre |
| PA | : Poussée d'Archimède, en Newton |
| PL | : Poids de la lame, en Newton. |

Sur le plan pratique, la mesure de F s'effectue en suspendant la lame au plateau d'une balance de précision et en déplaçant verticalement le récipient contenant les deux liquides. L'avantage de la méthode de Wilhelmy est de donner un profil de l'angle de contact sur la surface de la lame et non un résultat ponctuel comme celui obtenu avec la technique de la goutte posée.

L'étude de la mouillabilité eau-huile des minéraux de gisement par la méthode de Wilhelmy n'a été généralement abordée que pour la silice en employant des lames de verre. Ces lames, utilisées habituellement comme couvre-objet en microscopie, ont l'avantage d'être disponibles à des dimensions standardisées, en grande quantité et pour un faible prix.

Il se pose malheureusement un problème important si l'on souhaite appliquer la méthode de Wilhelmy à d'autres minéraux, tels que par exemple les argiles ou les carbonates. En effet, il est très difficile, voire absolument impossible, d'obtenir certains minéraux purs sous une forme autre que pulvérulente. Dans le cas où un massif minéral existe, il est encore nécessaire qu'il soit suffisamment résistant pour supporter la découpe de pièces dimensionnées.

Une solution est le collage de particules minérales sur un support. Toutefois, dans les conditions expérimentales de la méthode de Wilhelmy, la matière adhésive liant les particules au substrat doit présenter des qualités rarement simultanément remplies par les colles et les résines classiques :

- inertie chimique vis-à-vis de l'eau et de l'hydrocarbure,
- stabilité thermique,
- tenue de l'adhésion aux fluides de mesure,
- absence totale de solvant ou d'additif capable de s'adsorber sur les minéraux ou de migrer dans les fluides, et
- résistance aux solvants de nettoyage ou au séchage.

Concernant les argiles, il existe une technique très simple de collage par effet électrostatique. Elle consiste à faire sécher sur le support une suspension d'argile contenant ou non une faible quantité de chlorure de calcium. Ce procédé, utilisé couramment dans la préparation d'échantillons pour les analyses spectroscopiques, présente deux désavantages pour la détermination de la mouillabilité considérée plus particulièrement dans l'invention : le premier est la difficulté de maîtriser le dépôt régulier d'une quantité d'argile donnée, le second est l'incertitude sur le maintien de l'adhésion dans l'eau et l'hydrocarbure, notament dans le cas de balayages alternés par ces deux fluides.

On a maintenant découvert une méthode de collage de particules minérales sur des supports qui peuvent être plans, tels que par exemple des lames de verre ou de métal, en utilisant le procédé ⟨⟨sol-gel⟩⟩. La méthode de l'invention permet de déposer sur le support une mince couche d'un composé organométallique servant de colle. Après séchage, le liant entre les particules et le support n'est plus constitué que d'un oxyde métallique. Les problèmes de pollution organique et d'inertie chimique ne se posent alors plus et l'on bénéficie de surcroît de la stabilité thermique de l'oxyde métallique.

On sait que le procédé sol-gel est une voie de synthèse permettant d'obtenir des verres ou des céramiques à partir de composés moléculaires organiques réagissant à faible température, en milieu liquide, par rapport aux verres classiques formés par fusion d'oxydes à haute température.

Ce procédé met en jeu l'hydrolyse et la condensation d'alkoxydes métalliques. Ces composés ont pour formule générale $M(\text{-O-R})_m$ où M est un métal (silicium, aluminium, titane...), m son nombre de coordination, -O-R, un radical alkoxy lié au métal par l'intermédiaire de l'oxygène et dont la chaîne alkyl R est de formule générale: $C_nH_{(2n+1)}$. La réaction d'hydrolyse peut être représentée comme suit:

$$M(-OR)_m + H_2O \rightarrow HO-M(O-R)_{m-1} + R-OH$$

Le composé formé réagit en provoquant la condensation :

$$M(-OR)_m + HO-M(-OR)_{m-1} \rightarrow (RO-)_{m-1}\, M-O-M(-OR)_{m-1} + R-OH$$

ou

$$HO-M(-OR)_{m-1} + HO-M(-OR)_{m-1} \rightarrow (RO-)_{m-1}\, M-O-M(-OR)_{m-1} + H_2O$$

L'ensemble de ces deux réactions donne :

$$M(-OR)_m + \frac{m}{2} H_2O \rightarrow MO_{\frac{m}{2}} + mR-OH$$

Il est ainsi possible d'obtenir, entre autres, de la silice ($SiO_2$), de l'alumine ($Al_2O_3$), de l'oxyde de titane ($TiO_2$), selon que le métal M considéré est Si, Al ou Ti.

Au niveau microscopique, les différentes phases du procédé sont les suivantes : dans un de départ contenant un solvant, l'alkoxyde métallique et l'eau, la première étape est la formation d'amas polymériques. Sous l'effet des réactions d'hydrolyse et de condensation, leurs tailles augmentent et on aboutit à la formation d'un gel. Le temps nécessaire, à température ambiante, peut aller de quelques minutes à plusieurs dizaines de jours, selon les constituants initiaux et les conditions expérimentales. Le gel obtenu est ensuite séché à température ambiante ou par chauffage léger afin d'éliminer le ou les solvants et les produits de réaction ; il perd, lors de cette phase, plus de 50 % de son volume initial. L'adhésion du sol-gel sur un support (verte, métaux) est obtenue par réaction entre les groupements O-H de la surface et l'alkoxyde métallique partiellement hydrolysé :

$$/-O-H + R-O-M-(O-R)_m \;\text{---->}\; /-O-M-(O-R)_m + R-O-H$$
$$/-O-H + H-O-M-(O-R)_m \;\text{---->}\; /-O-M-(O-R)_m + H_2O$$

L'invention propose donc une méthode de collage de particules minérales sur un support, comprenant:

(a) une étape dans laquelle on recouvre ledit support sur au moins une de ses faces d'un film de solution sol-gel,

par trempage dans un liquide contenant un composé organométallique;

(b) une étape dans laquelle ledit film se gélifie et l'on projette sur celui-ci les particules minérales à coller ; et

(c) une étape dans laquelle on sèche le film recouvert de particules et on le débarrasse des particules non-adhérentes.

On décrit ci-après de façon plus détaillée les différentes étapes de la méthode de l'invention, en considérant plus particulièrement le cas d'un support plan.

Les supports utilisés peuvent être plans et consister par exemple en des lames de verte ou des lames métalliques constituées de divers métaux ou alliages, tels que des aciers.

Pour réaliser l'étape (a) de trempage, on plonge en partie ou totalement le support dans une solution comprenant un composé organométallique qui peut être par exemple un composé organique du silicium, du titane ou de l'aluminium. Ce peut être par exemple un tétraalkylorthosilicate, tel que le tétraéthylorthosilicate, ou un tétraalkylorthotitanate, tel que le tétraéthylorthotitanate.

La solution est le plus souvent une solution hydroalcoolique contenant par exemple au moins 70 % en volume d'alcool (en particulier d'éthanol) et de l'eau acidifiée par exemple par de l'acide chlorhydrique.

La concentration de la solution en tétraalkylorthosilicate va généralement de 5 à 20 % en volume.

La lame maintenue verticalement est plongée au moins en partie dans la solution, puis tirée verticalement hors de celle-ci de préférence à une vitesse régulière, de manière à obtenir un film d'épaisseur constante. La vitesse de traction de la lame peut être de 100 à 1000 mm/minute. L'épaisseur résultant du dépôt liquide augmente avec la vitesse de traction. Elle est en général telle que l'épaisseur du dépôt sec soit de 0,5 à 1,5 micromètres.

On peut envisager de ne revêtir qu'une face de la lame du film de sol-gel. Pour ce faire, on peut masquer la face à protéger par exemple par un film plastique adhésif empêchant la fixation du gel sur cette face.

Le film de sol-gel ainsi déposé sur au moins une des faces du support se gélifie dans la deuxième étape (b) de la méthode. Si on met en jeu un composé organique du silicium, par exemple le tétraéthylorthosilicate, la réaction de gélification mise en oeuvre peut s'écrire comme suit :

$$Si(O{-}C_2H_5)_4 + 2\,H_2O \xrightarrow{H^+} Si\,O_2 + 4\,C_2H_5OH$$

Pendant la gélification, dans la deuxième étape (b), on procède au collage des particules minérales, par exemple en introduisant la lame dans une enceinte, dans laquelle sont mises en mouvement les particules minérales à coller. La taille moyenne de ces particules peut aller de quelques dixièmes de micromètres à quelques centaines de micromètres, (par exemple de 5 à 75 micromètres), selon le matériau considéré. La lame étant mise en rotation à l'intérieur de l'enceinte, par exemple à une vitesse de 200 à 500 tours/minute, on insuffle dans l'enceinte un jet de gaz comprimé (par exemple de l'air) sous une pression par exemple de 4 à 8 Pa, pendant quelques secondes. Une partie des particules mises en mouvement à l'intérieur de l'enceinte vient se coller à la surface du film de sol-gel.

Pour éviter la formation d'agrégats de particules, on peut contrôler la taille maximale des particules à coller. Pour cela, il est possible d'intercaler entre les particules et la lame en mouvement un tamis de maille convenable.

Dans l'étape (c), on laisse ensuite la lame sécher, par exemple à température ambiante, par exemple pendant 6 à 24 heures. L'excès de particules non adhérentes est ensuite enlevé par une méthode appropriée : on peut par exemple soumettre la lame à des ultra-sons pendant par exemple environ 1 minute dans un liquide de lavage, qui peut être de l'eau distillée, un alcool, ou un liquide hydrocarboné, éventuellement chloré, selon la nature des particules et leur destination finale. Enfin,la lame peut être rincée, par exemple à l'éthanol et stockée à l'abri des poussières.

Par la méthode de l'invention, telle qu'elle a été décrite ci-dessus, on peut recouvrir de particules une fraction importante de la surface de la lame. Le taux de recouvrement peut être ajusté par modification des paramètres expérimentaux. On peut choisir par exemple d'obtenir une surface recouverte à environ 70 %.

Les particules que l'on cherche à coller sur des supports plans par la méthode de l'invention peuvent consister plus particulièrement en des particules d'argiles (telles que la kaolinite ou l'illite), de carbonates (tels que la calcite ou la dolomite) ou de silice.

On peut aussi envisager de coller des particules minérales comportant en surface un film organique, par exemple constitué de composés tirés du pétrole brut, qui est fixé par exemple par dépôt ou adsorption, ou par modification chimique de la surface de la particule, par exemple greffage de silanes (par exemple par l'hexadécyltrichlorosilane).

En général, les lames ainsi recouvertes de poudres minérales par le procédé de collage de l'invention sont utilisées

pour des essais de mouillabilité par deux fluides par exemple huile et eau. Dans ce cas, il est généralement avantageux de les débarrasser des impuretés qui risquent de modifier leurs caractéristiques de mouillabilité. A cet effet, on procède en général à un nettoyage poussé. Ainsi par exemple. les lames revêtues de carbonates peuvent être nettoyées au moyen d'ozone sous rayonnement ultraviolet ; les revêtements d'argiles peuvent être nettoyées au moyen d'une solution aqueuse d'eau oxygénée et les revêtements de silice au moyen d'un mélange sulfonitrique ou d'un mélange sulfochromique ou au moyen d'ozone sous rayonnement ultraviolet.

Ces divers traitements n'affectent pas la tenue de l'adhésion des particules sur la lame.

Par ailleurs, il est possible de modifier la mouillabilité des surfaces minérales réalisées par collage selon l'invention, par exemple pour rendre mouillable aux hydrocarbures une surface minérale de caractère hydrophile.

On peut procéder par greffage, par adsorption ou par dépôt de composés organiques.

Ainsi, il est possible de greffer des silanes sur un sol-gel ou un sol-gel recouvert de silice.

Sur des lames recouvertes par exemple d'argile, de calcite ou de silice, on peut encore adsorber des composés organiques, par exemple du pétrole brut. ou encore des solutions d'asphaltènes dans le toluène. L'adhésion des particules minérales (argiles. carbonates, silice, etc.) n'est pas altérée pendant ou après contact avec ces milieux.

Les exemples suivants illustrent l'invention.

On utilise comme supports des lames de verre employées comme couvre-objet en microscopie, de dimensions 30 mm x 24 mm x 0,15 mm.

Dans chaque expérimentation, on maintient la lame à l'une des ses extrémités par une pièce constituée d'un embout de matière plastique fendu en son milieu et prolongé par une tige métallique.

On met en oeuvre une solution hydroalcoolique à 20 % en poids de tétraéthylorthosilicate acidifiée par de l'acide chlorhydrique.

On plonge la lame de verre en partie dans la solution puis on la tire verticalement hors de celle-ci à une vitesse constante de 500 mm par minute.

La gélification se fait rapidement : le tétraéthylorthosilicate se transforme en silice et l'alcool (éthanol) et l'eau sont éliminées par évaporation.

La lame est rapidement transferée dans l'enceinte, fixée sur un embout de matière plastique fendu en son milieu. et prolongé par une tige métallique reliée à un moteur.

La lame est mise en rotation et les particules minérales, préalablement introduites dans l'enceinte, sont mises en suspension à l'aide d'un jet d'air comprimé produit à la base de l'enceinte.

Une fraction des particules vient se fixer sur le film de sol-gel en cours de gélification.

La lame recouverte de particules est extraite de l'enceinte et séchée à température ambiante durant douze heures. Elle est ensuite débarrassée de l'excès de particules par passage aux ultra-sons dans un bain d éthanol.

On réalise par cette méthode le collage de particules de kaolinite, d'illite et de calcite.

Les figures 1 à 4 annexées sont des microphotographies obtenues en microscopie électronique à balayage:

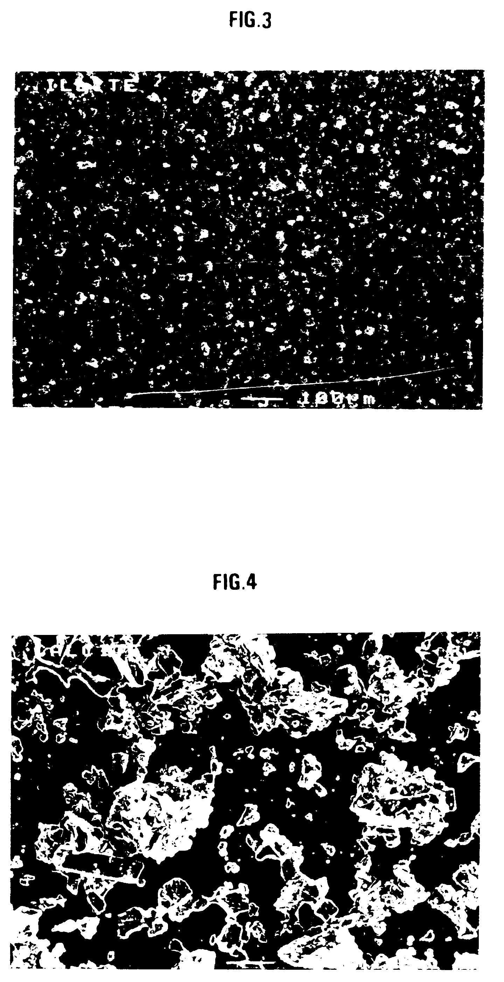

- de la surface du sol-gel sans dépôt de particules (figure 1),
- d'une surface après collage de particules de kaolinite (figure 2) sur laquelle on peut mesurer la taille moyenne de particules collées (d'environ 5 micromètres) ;
- d'une surface après collage de particules d'illite (figure 3 : taille moyenne des particules de 25 à 65 micromètres) ; et
- d'une surface après collage de particules de calcite (figure 4 : taille moyenne des particules de 1 à 20 micromètres).

## Revendications

1. Méthode de collage de particules minérales sur un support, comprenant:

   (a) une étape dans laquelle on recouvre ledit support sur au moins une de ses faces d'un film de solution sol-gel, par trempage dans un liquide contenant un composé organométallique ;

   (b) une étape dans laquelle ledit film se gélifie et l'on projette sur celui-ci les particules minérales à coller ; et

   (c) une étape dans laquelle on sèche le film recouvert de particules et on le débarrasse des particules non-adhérentes.

2. Méthode selon la revendication 1, caractérisée en ce que ledit support est plan.

3. Méthode selon les revendications 1 et 2, caractérisée en ce que ledit support consiste en une lame de verte ou en

une lame métallique.

4. Méthode selon l'une des revendications 1 à 3, caractérisée en ce que le composé organométallique consiste en un tétraalkylorthosilicate.

5. Méthode selon la revendication 4, caractérisée en ce que ledit tétraalkylorthosilicate est le tétraéthylorthosilicate.

6. Méthode selon l'une des revendications 1 à 5, caractérisée en ce que, dans l'étape (a), on tire verticalement le support trempé, à une vitesse constante de 100 à 1000 mm par minute, de manière à recouvrir ledit support d'un film ayant une épaisseur correspondant à une épaisseur de dépôt sec de 0,5 à 1,5 micromètre.

7. Méthode selon l'une des revendications 1 à 6, caractérisée en ce que, dans l'étape (b), on colle les particules sur le support recouvert d'un film mettant en rotation ledit support dans une enceinte, dans laquelle lesdites particules sont mises en mouvement.

8. Méthode selon la revendication 7, caractérisée en ce que, dans l'étape (b), on met le support en rotation à une vitesse de 200 à 500 tours par minute et l'on met en mouvement les particules par entraînement au moyen d'un jet de gaz comprimé.

9. Méthode selon l'une des revendications 7 et 8, caractérisée en ce que, dans l'étape (b), on place entre les particules à mettre en mouvement et le support en rotation un tamis de maille convenable pour éviter la projection et le collage d'agrégats de particules.

10. Méthode selon l'une des revendications 7 à 9, caractérisée en ce que les particules à coller ont une taille de quelques dixièmes de micromètres à quelques centaines de micromètres.

11. Méthode selon l'une des revendications 1 à 10, caractérisée en ce que, dans l'étape (c), après séchage, on élimine les particules non adhérentes en soumettant le support recouvert à des ultra-sons dans un liquide de lavage.

## Claims

1. A method of adhesively bonding mineral particles to a support, comprising :

   a) a step in which said support is covered on at least one of its sides with a sol-gel solution by immersion thereof in a liquid containing an organometallic compound ;
   b) a step in which said film gels and the mineral particles to be bonded are projected there onto ; and
   c) a step in which the particle-coated film is dried and the unbonded particles are removed.

2. A method according to claim 1, characterised in that said support is planar.

3. A method according to claim 1 or claim 2, characterised in that said support consists of a glass strip or a metal strip.

4. A method according to any one of claims 1 to 3, characterised in that the organometallic compound is a tetraalkylorthosilicate.

5. A method according to claim 4, characterised in that said tetraalkylorthosilicate is tetraethylorthosilicate.

6. A method according to any one of claims 1 to 5, characterised in that, in step a), the immersed support is pulled vertically at a constant speed of 100 to 1000 mm per minute, to coat said support with a film with a thickness which corresponds to a dry deposit thickness of 0.5 to 1.5 micrometres.

7. A method according to any one of claims 1 to 6, characterised in that, in step b), the particles are bonded to the support coated with the film by rotating said support in a chamber in which said particles are in motion.

8. A method according to claim 7, characterised in that, in step b), the support is rotated at a speed of 200 to 500 revolutions per minute and the particles are moved by entrainment in a jet of compressed gas.

9. A method according to claim 7 or claim 8, characterised in that, in step b), a sieve with a mesh size which can prevent projection and adherence of aggregates of particles is placed between the particles to be moved and the rotating support.

10. A method according to any one of claims 7 to 9, characterised in that the particles to be bonded are several tens of micrometres to several hundreds of micrometres in size.

11. A method according to any one of claims 1 to 10, characterised in that, in step c), the unbonded particles are eliminated after drying by subjecting the coated support to ultrasound vibrations in a washing liquid.

**Patentansprüche**

1. Verfahren zum Kleben mineralischer Partikel auf einen Träger, umfassend:

   (a) eine Stufe, in der man diesen Träger auf wenigstens einer seiner Flächen mit einem Film aus einer Sol-Gel-Lösung durch Tauchen in eine eine organometallische Verbindung enthaltende Flüssigkeit bedeckt;
   (b) eine Stufe, in der dieser Film sich gelifiziert und man auf diesen die mineralischen zu verklebenden Partikel schleudert; und
   (c) eine Stufe, in der man den mit Partikeln bedeckten Film trocknet und ihn von den nicht-haftenden Partikeln befreit;

2. Verfahren nach Anspruch 1, dadurch gekennzeichnet, daß dieser Träger plan ist.

3. Verfahren nach einem der Ansprüche 1 und 2, dadurch gekennzeichnet, daß dieser Träger aus einer Glasscheibe oder einer metallischen Platte besteht.

4. Verfahren nach einem der Ansprüche 1 bis 3, dadurch gekennzeichnet, daß die organometallische Verbindung aus Tetraalkylorthosilikat besteht.

5. Verfahren nach Anspruch 4, dadurch gekennzeichnet, daß das Tetraalkylorthosilikat gleich Tetraethylorthosilikat ist.

6. Verfahren nach einem der Ansprüche 1 bis 5, dadurch gekennzeichnet, daß in der Stufe (a) man vertikal den getauchten Träger bei einer konstanten Geschwindigkeit von 100 bis 1000 mm pro Minute derart zieht, daß dieser Träger mit einem Film bedeckt wird, der eine Dicke entsprechend einer Dicke der trockenen Abscheidung von 0,5 bis 1,5 Mikrometer entspricht.

7. Verfahren nach einem der Ansprüche 1 bis 6, dadurch gekennzeichnet, daß in der Stufe (b) man die Partikel auf den mit einem Film bedeckten Träger klebt, indem man diesen Träger in einem umschlossenen Raum in Drehung versetzt, in welchem diese Partikel in Bewegung versetzt werden.

8. Verfahren nach Anspruch 7, dadurch gekennzeichnet, daß in der Stufe (b) man den Träger bei einer Geschwindigkeit von 200 bis 500 Umdrehungen pro Minute in Drehung versetzt und man die Partikel durch Mitreißen vermittels eines Strahls komprimierten Gases in Bewegung versetzt.

9. Verfahren nach einem der Ansprüche 7 und 8, dadurch gekennzeichnet, daß in der Stufe (b) man zwischen die in Bewegung zu versetzenden Partikel und den in Drehung versetzten Träger ein zweckmäßiges Maschensieb einbringt, um das Verspritzen und Verkleben von Partikelzusammenballungen zu vermeiden.

10. Verfahren nach einem der Ansprüche 7 bis 9, dadurch gekennzeichnet, daß die zu verklebenden Partikel eine Abmessung von etlichen zehntel Mikrometern bis zu etlichen hundert Mikrometern haben.

11. Verfahren nach einem der Ansprüche 1 bis 10, dadurch gekennzeichnet, daß man in der Stufe (c) nach dem Trocknen die nicht-haftenden Partikel eliminiert, indem man den überdeckten Träger Ultraschallwellen in einer Waschflüssigkeit aussetzt.

FIG.1

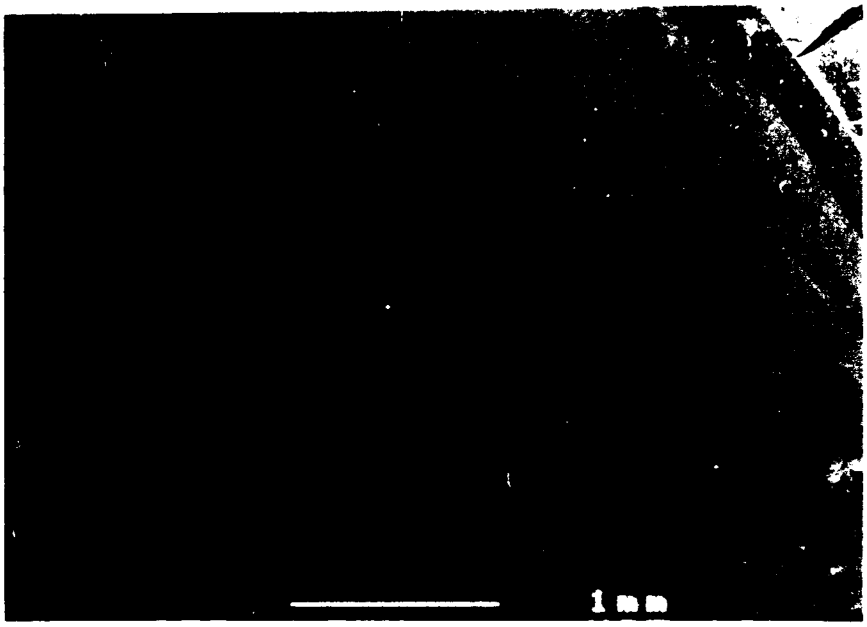


FIG.2

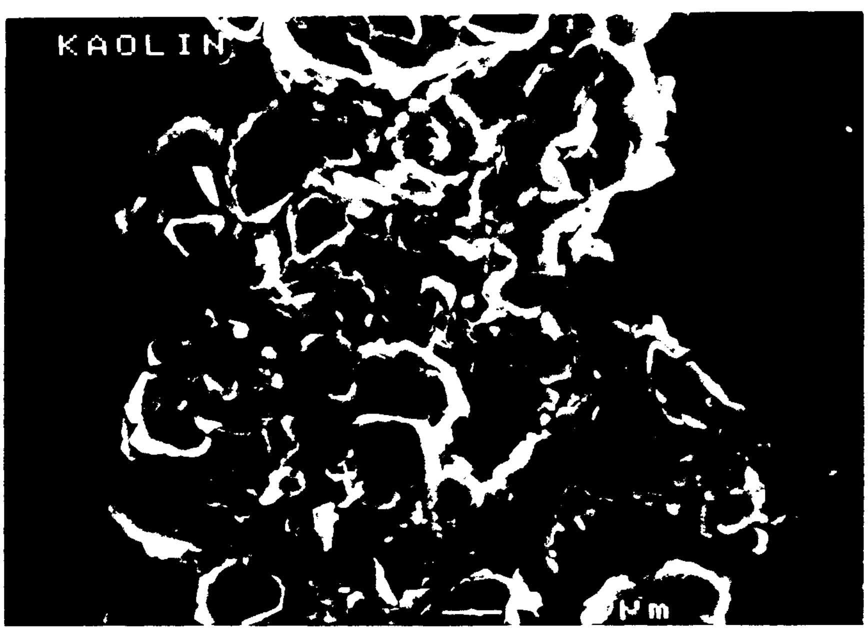

FIG.3

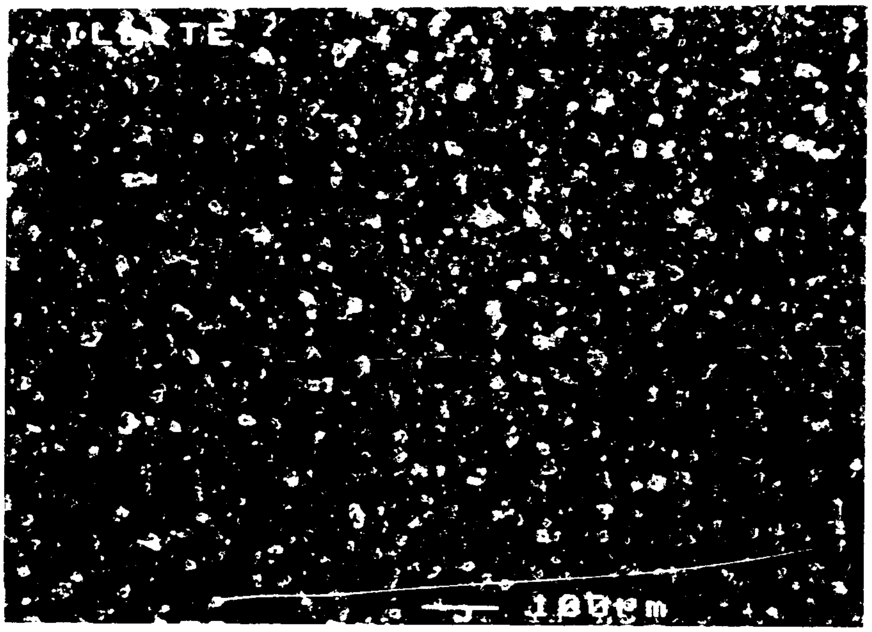

FIG.4